# EUROPÄISCHE PATENTSCHRIFT

(11) **EP 2 134 581 B1**
(45) Veröffentlichungstag und Bekanntmachung des Hinweises auf die Patenterteilung: **15.06.2011**
(21) Anmeldenummer: 08734764.7
(22) Anmeldetag: 26.03.2008
(51) Int. Cl.: B60T 17/22, B60T 17/08

(54) **KOMPAKT-KOMBIZYLINDER MIT MANUELLER LÖSEVORRICHTUNG**
COMPACT COMBINED CYLINDER COMPRISING A MANUAL RELEASE DEVICE
CYLINDRE COMBINÉ COMPACT COMPORTANT UN DISPOSITIF DE RELÂCHEMENT MANUEL

(30) Priorität: 27.03.2007 DE 102007015208
(43) Veröffentlichungstag der Anmeldung: 23.12.2009
(73) Patentinhaber: Knorr-Bremse Systeme für Nutzfahrzeuge GmbH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2008/002363
(87) Internationale Veröffentlichungsnummer: WO 2008/116629

(56) Entgegenhaltungen:
- WO-A-97/07322
- DE-A1-102005 044 708

## Beschreibung

Die Erfindung betrifft einen Bremszylinder für pneumatisch betätigte Fahrzeugbremsen, insbesondere für Nutzfahrzeuge, nach dem Oberbegriff des Anspruchs 1.

Die Feststellbremse wird bei schweren Nutzfahrzeugen mittels so genannter Federspeicherzylinder betätigt. Die Bremsbetätigungskraft wird hierbei über eine gespannte Feder erzeugt, so dass den Anforderungen an eine mechanisch wirkende Feststellbremse genüge getan ist.

Da die Federspeicherzylinder in der Regel dazu ausgelegt sind, sehr hohe Kräfte zu erzeugen, ist ein manuelles Lösen im Betriebsfall nicht mehr sinnvoll. Das Lösen der Feststellbremse geschieht daher bei pneumatisch betätigten Bremsen mittels Druckluft.

Um dies zu ermöglichen, sind Federspeicherzylinder in der Regel mit einem Lösekolben ausgerüstet. Mit diesem Kolben ist es möglich, bei einer Einleitung von Druckluft die Feder soweit zusammen zu drücken, bis die Bremse gelöst ist. Damit die Feststellbremse während der Fahrt nicht eingelegt ist, wird der Kolben ständig mit Druckluft beaufschlagt, so dass sich die Feder nicht entspannen kann und somit die Feststellbremse nicht zur Wirkung kommt.

Die üblichste Bauform ist der so genannte Kombizylinder. Ein Kombizylinder besteht aus bzw. kombiniert zwei verschiedene Bremszylinderarten, nämlich einem Federspeicherzylinder für die Feststellbremsanlage (FBA) und einem Druckluftzylinder (meist einen Membranzylinder) für die Betriebsbremsanlage (BBA).

Üblicherweise sind die beiden Zylinder hintereinander, in axialer Richtung angeordnet. Hinter dem Membranteil des Kombizylinders ist der Federspeicherteil angeordnet, welcher mit seiner Kolbenstange auf den Kolbenteller des Membranzylinders und von diesem auf den Bremshebel wirkt.

Diese Bauform benötigt relativ viel Bauraum. Durch die Einführung aufwendigerer Fahrwerkssysteme, wie z.B. Einzelradaufhängungen, Leichtbauachsen etc wird der Bauraum jedoch zunehmend limitiert.

Es gibt daher Bestrebungen durch andere Bauformen und Wirkungsweisen den Platzbedarf für den Feststellbremszylinder zu minimieren.

Eine kompaktere Bauform bietet insofern der so genannte Kompaktkombizylinder. Einen derartigen Bremszylinder offenbart die DE 10 2005 044 708 A1. Nach dieser Erfindung wird die Funktion des Feststellbremszylinders direkt in den Betriebsbremszylinder integriert. Die Federspeicherfeder wird hierbei nicht mehr über einen separaten Federspeicherkolben betätigt sondern ebenfalls über den Kolben des Betriebsbremszylinders. Um die Feststellbremse zu lösen, wird für eine kurze Zeitspanne der BBA-Kolben mittels einer speziellen Ansteuerung mit Druckluft beaufschlagt.

WO 97/07322 A beschreibt einen konventionellen kombizylinder.

Wie vorstehend beschrieben, erfolgt das Lösen der Feststellbremse im Regelfall mit Hilfe von Druckluft. Daneben muss es aber auch möglich sein, die Feststellbremse bei einem Druckverlust durch einen manuellen Vorgang zu lösen.

Bei konventionellen Kombizylinder wird dazu die Feder mit Hilfe einer Gewindespindel (der so genannten Lösespindel) zurückgezogen. Die Funktion des Betriebsbremszylinders ist dadurch nicht beeinträchtigt.

Beim Kompaktkombizylinder kann dies nicht auf so einfache Weise dargestellt werden, da der BBA-Kolben und die Federspeicherfeder mit einander verbunden sind. Würde man die Feder durch eine von außen zugängliche Gewindespindel zurückziehen, wäre auch der BBA-Kolben blockiert und folglich auch die Funktion des BBA-Zylinders nicht mehr gegeben.

Die Lösung dieses Problems in Hinsicht auf gattungsgemäße Kombizylinder ist die Aufgabe der Erfindung.

Die Erfindung löst diese Aufgabe durch den Gegenstand des Anspruchs 1.

Vorteilhafte Ausgestaltungen der Erfindung sind in den Unteransprüchen angegeben.

Zum manuellen Lösen der Federspeicherfeder ist nach der Erfindung eine manuell betätigbare Lösevorrichtung erforderlich, die es ermöglicht, die Federspeicherwirkung bei Druckverlust ohne Beeinträchtigung der BBA-Funktion aufzuheben. Ferner ist es möglich, nach dem Lösevorgang die FBA-Wirkung durch einen manuellen Vorgang wieder herzustellen.

Die Erfindung eignet sich insbesondere auch für Kompakt-Kombizylinder, die eine Gewindespindel mit einem nicht selbst hemmenden Steilgewinde aufweisen. Das Steilgewinde dient in erster Linie dafür, die Federspeicherfeder in der so genannten Lösestellung arretieren zu können. Dazu wird die Gewindespindel mittels eines pneumatisch betätigten Sperrmechanismus festgesetzt. Beim Einlegen der Feststellbremse wird der Sperrmechanismus entlüftet, wodurch sich die Gewindespindel drehen und die Federspeicherfeder entspannen kann.

Nach einer besonders vorteilhaften Variante der Erfindung wird diese Gewindespindel auch zum manuellen Lösen der Federspeicherfeder genutzt. Dabei wird die Gewindespindel durch eine externe Krafteinleitung in Drehung versetzt. Da es sich hierbei um ein nicht selbst hemmendes Steilgewinde handelt, würde z.B. beim Umsetzen des Schraubenschlüssels die Spindel sofort wieder zurückdrehen und die Federspeicherfeder somit wieder zur Wirkung kommen.

Daher ist es erforderlich, dass der Mechanismus mit einer insbesondere richtungsabhängigen Sperrfunktion bzw. -vorrichtung ausgestattet ist. Diese Sperrvorrichtung wird nach den erfindungsgemäßen Varianten auch noch weiteren Anforderungen gerecht:
- Die Sperrvorrichtung soll vorzugsweise so gestaltet sein, dass er beim Normalbetrieb des Bremszylinders ausgeschaltet ist. Andernfalls wäre es nicht möglich, die Federspeicherbremse einzulegen, da die Drehung der Gewindespindel in Entspannungsrichtung der Federspeicherfeder durch die richtungsabhängige Sperrwirkung unterbunden ist.
- Die Sperrvorrichtung soll vorzugsweise so gestaltet sein, dass es möglich ist die Gewindespindel in beide Richtungen zu verdrehen, damit die FBA-Bremse manuell sowohl gelöst als auch eingelegt werden kann. Das Entspannen der Federspeicherfeder sollte dabei aus Sicherheitsgründen nicht einstufig und undosiert sondern manuell dosierbar geschehen (analog dem Verhalten bei einem konventionellen Federspeicherzylinder).
- Aufgrund des begrenzten Bauraums soll die Sperrvorrichtung möglicht kompakt und einfach aufgebaut sein.
- Die Komponenten sollten so gestaltet sein, dass eine kostengünstige Fertigung, z.B. durch spanlose Umformtechnik, möglich ist.

Grundsätzlich sind zwei unterschiedliche Funktionsprinzipien denkbar: Zum einen reibschlüssige Systeme, basierend auf einem Freilaufprinzip und zum anderen formschlüssige Systeme basierend auf einem Ratschenmechanismus.

Varianten dieser Ausführungsformen sind den Unteransprüchen zu entnehmen.

Nachfolgend wird die Erfindung unter Bezug auf die Zeichnung anhand eines Ausführungsbeispiels näher erläutert. Es zeigen:
- Figur 1: den erfindungsgemäßen Bremszylinder im Halbschnitt, in der Lösestel- lung und in der Feststellbremsstellung
- Fig. 2: eine Detailansicht aus Fig. 1; und
- Fig. 3 bis 6: eine teilgebrochene Darstellung von Elementen einer manuell betätigba- ren Lösevorrichtung des Kompaktbremszylinders aus Fig. 1 und 2 in ver- schiedenen Betriebszuständen;
- Fig. 7: einen weiteren erfindungsgemäßen Bremszylinder; und

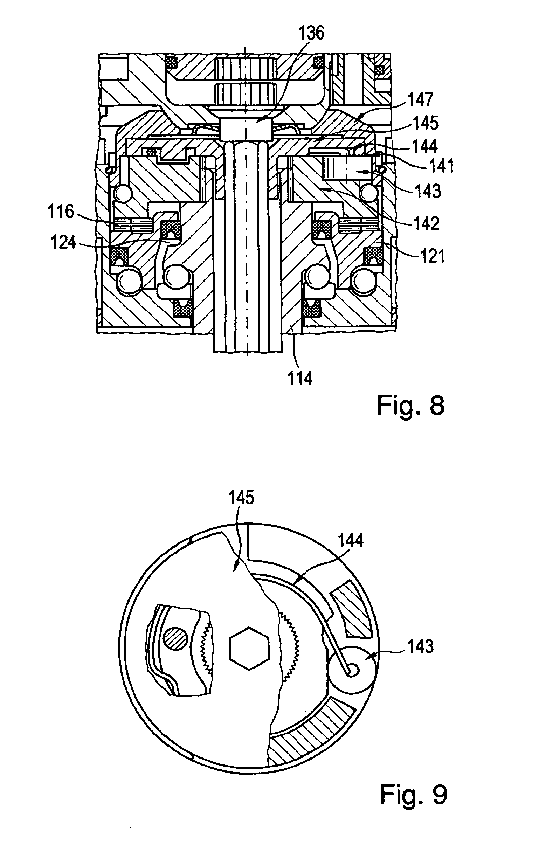

- Fig. 8: eine Detailansicht aus Fig. 7; und
- Fig. 9 bis 12: eine teilgebrochene Darstellung von Elementen einer manuell betätigba- ren Lösevorrichtung des Kompaktbremszylinders aus Fig. 7 und 8 in ver- schiedenen Betriebszuständen.

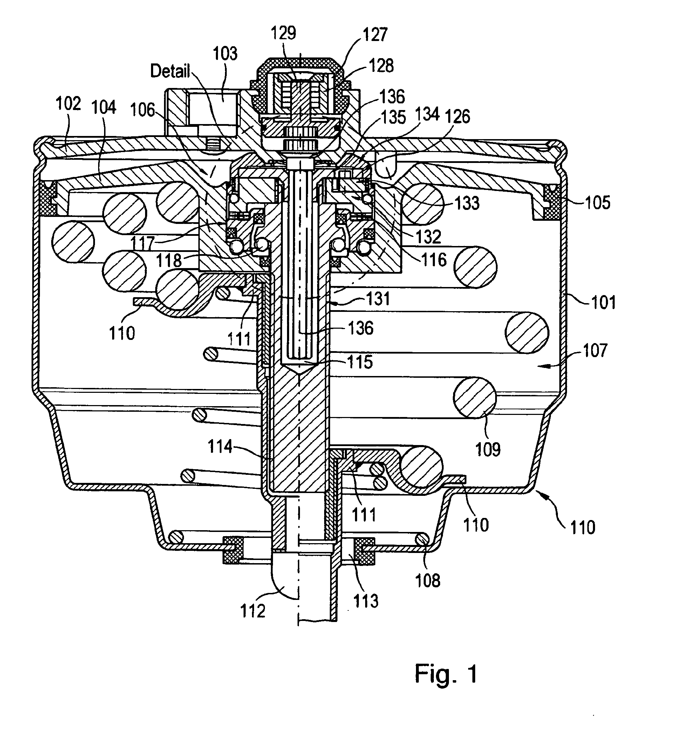

Fig. 1 zeigt einen Schnitt durch einen erfindungsgemäßen Kompaktbremszylinder 100, wobei in der linken Hälfte der Zeichnung der Federspeicher in gelöster Stellung und in der rechten Hälfte der Zeichnung der Federspeicher in eingelegter Stellung dargestellt ist.

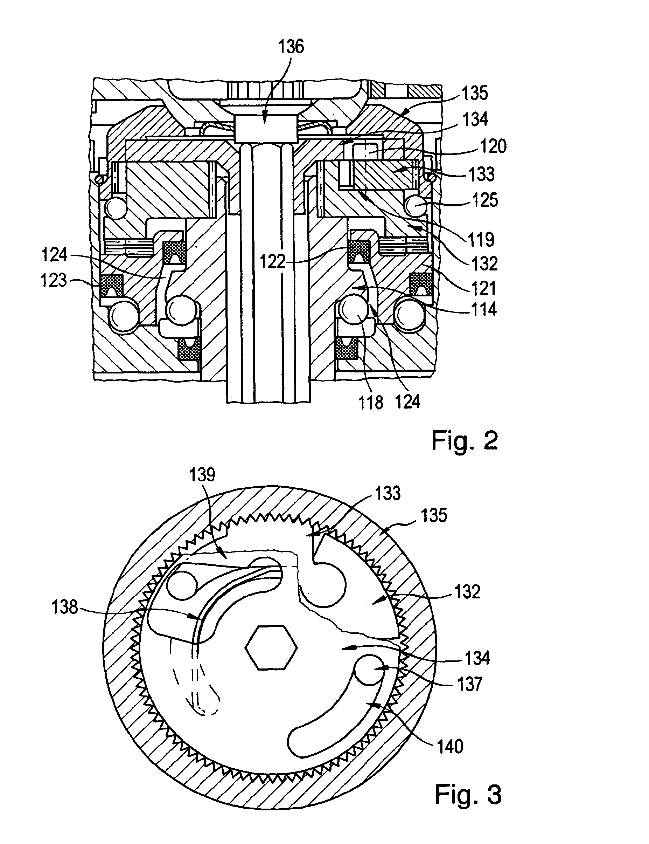

Der in den Figuren 1 bis 3 dargestellte Bremszylinder 100 weist ein topfförmiges - vorzugsweise im Wesentlichen zylindrisches - Gehäuse 101 auf.

Das Gehäuse 101 ist an einem seiner Enden von einem Deckel 102 verschlossen, der mit wenigstens einem oder mehreren Druckluftanschlüssen 103 versehen ist.

In dem topfförmigen Gehäuse 101 ist ein Kolben 104 mit einem Kolbendichtring 105 angeordnet, dessen Durchmesser samt dem Kolbendichtring 105 dem Innendurchmesser des Gehäuses 101 entspricht.

Der Kolben 104 kann durch den Druckluftanschluss 103 mit Druckluft beaufschlagt werden, die auch durch diesen Anschluss ausströmen kann.

Wie Fig. 1 zeigt, ist der Kolben 104 im mittleren Bereich abgesenkt, so dass ein Druckraum 106 entsteht.

Durch den Kolben 104 wird noch ein weiterer Raum 107 begrenzt, in den eine kegelige Rückholfeder 108 und eine Federspeicherfeder 109 eingesetzt ist.

Die Federspeicherfeder 109 ist zwischen den Kolben 104 und einen Federspeicherkolben 110 gesetzt, dessen Durchmesser kleiner ist als der Innendurchmesser des Gehäuses.

Die Rückholfeder 108 ist zwischen die von der Federspeicher abgewandte Seite des Federspeicherkolbens 110 und den vom Deckel abgewandte inneren Endbereich des Gehäuses 101 gesetzt.

Der Federspeicherkolben 110 liegt an seinem Innenumfang auf einem Kragen 111 einer Kolbenstange 112, die eine im Gehäuse 101 auf dessen vom Deckel 102 abgewandten Ende ausgebildete Öffnung 113 durchsetzt und zur Betätigung einer Zuspannvorrichtung einer Bremse dient.

Ein pneumatisch betätigbarer Sperrmechanismus 116 ist in einem mittigen Aufnahmeraum 117 des Kolben 104 an dessen zum Deckel 102 gewandten Seite des Kolbens 104 untergebracht, welcher den Sperrmechanismus aufnimmt.

Die Kolbenstange 112 ist hülsenförmig gestaltet und mit einem Innengewinde versehen, in dass eine mit Außengewinde versehene Gewindespindel 114 eingreift. Die Gewindespindel 114 ist nicht selbsthemmend ausgelegt. Sie ist vorzugsweise an einem ihrer Enden direkt oder über Zwischenelemente mit dem pneumatisch betätigbaren Sperrmechanismus gekoppelt, der hier in Form einer pneumatisch betätigbaren Kupplung oder Bremse ausgebildet ist. Im dargestellten Ausführungsbeispiel ist dieser Sperrmechanismus als formschlüssige Kupplung 116 ausgebildet.

Die Kupplung 116 ist hier in vorteilhafter und kompakt bauender Weise zwischen den Axialflächen einer noch zu erläuternden Lagerscheibe 132, die mit der Gewindespindel drehfest gekoppelt ist, und einem Sperrmechanismuskolben 121 ausgebildet.

Der Sperrmechanismuskolben 121 ist an seinem Innen- und seinem Außenumfang mittels Kolbenringdichtungen 122, 123 gegen die Gewindespindel 114 und den Aufnahmeraum 117 abgedichtet.

Der Sperrmechanismuskolben 121 ist über einen Druckraum 124 über eine Druckluftleitung (hier nicht dargestellter Weise) mit Druckluft beaufschlagbar, wodurch die Kupplung 116 in Eingriff gebracht werden kann. Die Gewindespindel 114 ist entsprechend durch Druckluftbeaufschlagung des Druckraums 124 unterhalb des Sperrmechanismuskolbens 121 an Drehungen gehindert, so dass die FBA-Bremse außer Funktion setzbar ist.

Die Gewindespindel 114 ist über Wälzkörper 118 am Kolben 104 abgestützt.

In der linksseitigen Stellung der Fig. 1 ist die Kupplung 116 geschlossen bzw. die pneumatisch betätigbare Sperrvorrichtung aktiviert, so dass die Gewindespindel 114 gegen Drehungen gesichert ist.

Soll nun der Federspeicherkolben 110 in die in der rechtsseitigen Darstellung der Fig. 1 dargestellte Feststellbremsstellung überführt werden, wird die von dem Sperrmechanismuskolben 121 in die Kupplung 116 geleitete Kraft durch Druckabsenkung im Raum 124 verringert, so dass die von der Federspeicherfeder 109 aufgebrachte Kraft bewirkt, dass sich die Gewindespindel 114 dreht, wobei der Federspeicherkolben 110 mit der Kolbenstange 112 in der Bremsposition verschoben wird.

Die Drehzahl ist durch die Bremskraft der Kupplung 116 regelbar, so dass auch die lineare Bewegung des Federspeicherkolbens 110 gesteuert werden kann.

Zum Lösen der Bremsstellung wird entsprechend der vorherigen Ausführung der Druckraum 106 mit Druck beaufschlagt. Da der Feststellbremskolben 121 jetzt drucklos ist, kann sich die Gewindespindel 114 verdrehen und der Federspeicherkolben 110 wird entgegen der Wirkung der Federspeicherfeder 109 in die Ausgangsstellung zurückgefahren.

Bei Betriebsbremsungen bleibt die Kupplung 116 in Bremsstellung, so dass die beiden Kolben 104, 110 gemeinsam in die Bremsstellung bewegt werden, ohne ihre relative Stellung zueinander zu verändern. Die Wirkung der Federspeicherfeder 109 kann sich in diesem Zustand nicht entfalten. Analoges gilt für das Lösen der Bremse nach Betriebsbremsungen.

Bei dem Kompaktkombizylinder 100 ist die Funktion des Feststellbremszylinders in den Betriebsbremszylinder integriert. Die Federspeicherfeder 109 wird hierbei nicht mehr über einen separaten Federspeicherkolben betätigt sondern über den Kolben 104 des Betriebsbremszylinders. Um die Feststellbremse zu lösen, wird für eine kurze Zeitspanne der BBA-Kolben mittels einer speziellen Ansteuerung mit Druckluft beaufschlagt.

Wie vorstehend beschrieben, erfolgt das Lösen der Feststellbremse bzw. des Feststellbremsabschnittes im Regelfall mit Hilfe von Druckluft.

Daneben ist es erfindungsgemäß aber auch möglich, den Feststellbremsabschnitt bei einem Druckverlust manuell mit einer manuell betätigbaren Lösevorrichtung zu lösen.

Bei konventionellen Kombizylindern wird dazu die Feder mit Hilfe einer Gewindespindel (der so genannten Lösespindel) zurückgezogen. Die Funktion des Betriebsbremszylinders ist dadurch nicht beeinträchtigt.

Beim Kompaktkombizylinder kann dies nicht auf so einfache Weise dargestellt werden, da der BBA-Kolben und die Federspeicherfeder miteinander verbunden sind. Würde man die Federspeicherfeder 109 durch eine von außen zugängliche Gewindespindel zurückziehen, wäre auch der BBA-Kolben blockiert und folglich auch die Funktion des BBA-Zylinders nicht mehr gegeben.

Zum manuellen Lösen der Federspeicherfeder ist ein daher eine manuell betätigbare Lösevorrichtung vorteilhaft, die es ermöglicht, die Federspeicherwirkung bei Druckverlust ohne Beeinträchtigung der BBA-Funktion aufzuheben. Ferner soll es möglich sein, nach dem Lösevorgang die FBA-Wirkung durch einen manuellen Vorgang wieder herzustellen. Dies wird dadurch erreich, dass der manuell betätigbaren Lösevorrichtung eine ebenfalls manuell betätigbare Sperrvorrichtung zugeordnet ist. Die im Anschluss dargestellte und näher beschriebene Sperrvorrichtung basiert auf einem Ratschenmechanismus.

Der Ratschenmechanismus weist eine Lagerscheibe 132 auf, die mit der Gewindespindel 114 drehfest gekoppelt oder einstückig mit dieser ausgebildet ist. Sie ist mit Wälzkörpern 125 an einer Topfscheibe 135 abgestützt und je nach Funktionsstellung der Sperrvorrichtung, die zwischen diesen beiden Elementen 132, 135 wirkt, relativ zu dieser drehbar. Diese Lagerscheibe 132 weist eine Ausnehmung 119 für eine Sperrklinke 133 auf und einen Stift 137, der zur Drehmomentübertragung dient. Die Sperrklinke 133 ist drehbar in die Lagerscheibe 132 eingesetzt, durch einen angeformten Bolzen 120 mit der Steuerscheibe 134 verbunden und wird durch eine Blattfeder 138 radial nach außen gedrückt.

Der Ratschenmechanismus umfasst ferner eine Steuerscheibe 134 mit einer Steuerkontur 139, einem bogenförmigen Langloch 140 und einem mittig angeordneten sechskantförmigen Durchbruch.

Die Steuerkontur 139 dient zur Ein- und Ausschaltung der Sperrklinke 133. Das bogenförmige Langloch 140 dient dagegen ab einem bestimmten Winkelweg zur Übertragung des Drehmoments auf die Lagerscheibe 132. Der Innensechskant dient zur Einleitung des Drehmoments in die Steuerscheibe 134.

Ein profilierter Betätigungsdom 136 dient zur Einleitung des manuell aufgebrachten Drehmoments.

Ferner dient er zur Ein- und Ausschaltung des Mechanismus. Der Betätigungsdorn 136 ist im Gehäuse 101 des Bremszylinders dreh und schwenkbar gelagert.

Der Ratschenmechanismus umfasst ferner die Topfscheibe 135 mit Innenverzahnung, welche mit der Sperrklinke 133 mit entsprechender Verzahnung beim manuellen Lösevorgang im Eingriff ist. Die Topfscheibe 135 stützt sich am Kolben 104 ab und ist relativ zu diesem nicht verdrehbar.

Da es sich um einen formschlüssigen Ratschenmechanismus handelt, ist eine sichere und schlupffreie Arretierung der Federspeicherfeder gewährleistet.

Die Funktion dieser Anordnung ist wie folgt

Beim manuellen Lösen der Federspeicherfeder 109 muss die Gewindespindel 114 mit Hilfe eines Schraubenschlüssels zurückgedreht werden.

Das Drehmoment wird dabei über den Betätigungsdom 136 in die Steuerscheibe 134 übertragen. Durch das Verdrehen der Steuerscheibe 134 relativ zur Lagerscheibe 132 wird die Sperrklinke 133 durch die Steuerkontur 139 zum Eingriff in die Verzahnung der Topfscheibe 135 freigegeben. Die Sperrklinke 133 wird dabei durch die Blattfeder 138 elastisch gegen die Innenverzahnung der drehfesten Topfscheibe 135 gedrückt. Gleichzeitig wird nach der Überdrehung des Steuerwinkels über das bogenförmige Langloch 140 und einem entsprechenden Stift 137 in der Lagerscheibe 132 das Drehmoment von der Steuerscheibe 134 in die Lagerscheibe 132 und von dort in die Gewindespindel 114 übertragen.

Da die Sperrklinke 133 aufgrund der richtungsabhängigen Sperrwirkung ein selbsttätiges Zurückdrehen der Gewindespindel 114 verhindert, kann der Schraubenschlüssel ohne Aufdrehen der Gewindespindel 114 umgesetzt werden.

Dieser Vorgang kann solange wiederholt werden, bis die Federspeicherfeder die Lösestellung für die Feststellbremse erreicht hat.

Wenn die Federspeicherfeder von der Position "Federspeicher gelöst" manuell in die Position "Federspeicher eingelegt" gebracht werden soll, muss mit dem Schraubenschlüssel eine Drehbewegung in Sperrrichtung des Ratschenmechanismus ausgeführt werden. Dabei wird zunächst die Steuerscheibe 134 relativ zur Lagerscheibe 132 so weit verdreht, bis die Sperrklinke 133 durch die Steuerkontur 139 aus der Innenverzahnung der Topscheibe 135 gezogen wird. Sobald dieser Zustand erreicht wird, kann sich die Gewindespindel 114 verdrehen.

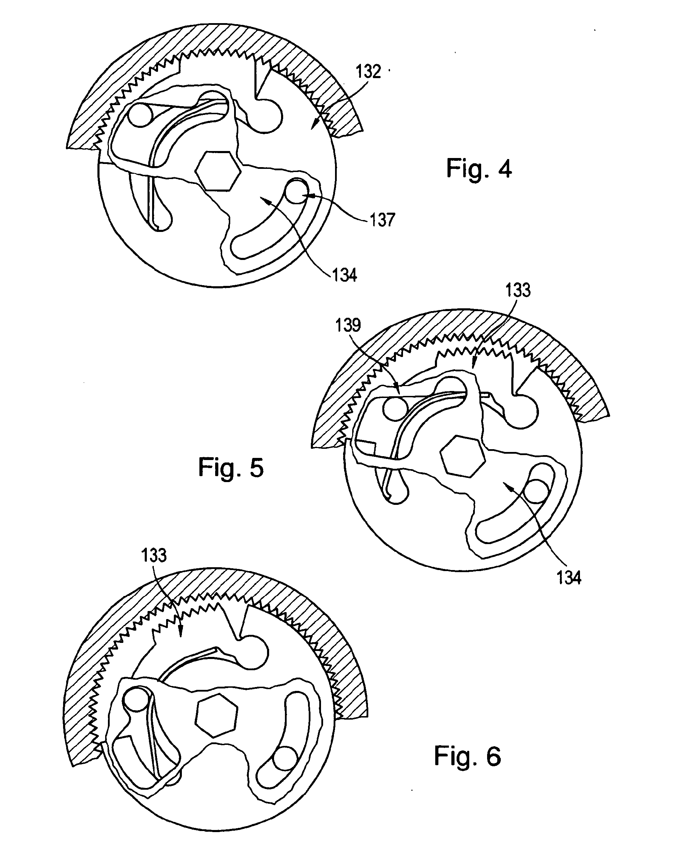

Fig. 5 zeigt ein derartiges manuelles Zustellen der Federspeicherbremse. Die Steuerscheibe 134 wird in dieser Figur nach links verdreht, wodurch die Sperrklinke 133 über die Kontur 139 aus der Verzahnung gezogen wird. Die Lagerscheibe 132 kann sich hierdurch bis zur nächsten Einrastung der Sperrklinke 133 drehen.

Da sich die Gewindespindel 114 schneller bewegt als die vom Schraubenschlüssel geführte Steuerscheibe 134 kommt es zu einer Relativbewegung zwischen Lagerscheibe 132 und Steuerscheibe 134 und folglich wieder zum Einrasten der Sperrklinke 133 in der Innenverzahnung der drehfesten Topfscheibe 135. Damit wird gewährleistet, dass sich die Gewindespindel 114 nur so weit und so schnell dreht, wie von der Drehbewegung des Schraubenschlüssels vorgegeben wird.

Hierzu ist es notwendig den Betätigungsdom 136 mit Hilfe eines Schraubenschlüssels in Richtung "Federspeicherbremse einlegen" zu drehen bis eine weitere Drehung nicht mehr möglich ist. Dadurch wird erreicht, dass die Steuerscheibe 134 relativ zur Lagerscheibe 132 verdreht wird und der Schaltpin der Sperrklinke 133 in eine Einraststellung auf der Steuerkontur 139 gebracht wird.

In Fig. 6 ist die manuelle Lösevorrichtung in ihrer deaktivierten Stellung dargestellt. Die Sperrklinke 133 verharrt in ihrer Ruheposition.

Fig. 4 zeigt die Sperrstellung des Freilaufs. Die Lagerscheibe 132 wird durch die Steuerscheibe 134 über den Pin 137 nach rechts gedreht. Die Lagerscheibe 132 kann sich in dieser Stellung nicht selbsttätig nach links drehen.

Wie vorstehend beschrieben, wird beim manuellen Lösevorgang der Federspeicherbremse mit Hilfe des so genannten Betätigungsdorns 136 und des Ratschenmechanismus 126 die Gewindespindel 114 zum Zurückziehen der Speicherfeder 109 mit einem Schraubenschlüssel verdreht.

Der Betätigungsdorn 136 steht beim manuellen Lösevorgang in Kontakt mit der manuellen Drehvorrichtung 127 zum Ansetzen eines Betätigungswerkzeuges, insbesondere eines Schraubenschlüssels. Die Drehvorrichtung 127 ist so gestaltet, dass z.B. beim Zurückdrehen, sprich Lösen des Federspeichers eine äußere Buchse 128 durch eine spezielle Formgebung in axialer Richtung einen Weg (Hub) ausführt, bis eine Drehmomenteinleitung möglich ist.

Durch diesen Axialhub ergibt sich zwischen der äußeren Buchse 128 und einem inneren Bolzen 129 stirnseitig eine Abstufung. Aufgrund dieser eindeutigen Konturänderung kann der manuelle Lösezustand der Federspeicherbremse visuell erkannt bzw. ertastet werden.

Nachfolgend wird ein weiteres Ausführungsbeispiel der Erfindung beschrieben. Offenbart wird ein weiterer Bremszylinder mit ei9ner Lösevorrichtung zum manuellen Lösen der Federspeicherfeder, der es ermöglicht die Federspeicherwirkung bei Druckverlust ohne Beeinträchtigung der BBA Funktion aufzuheben. Dabei kann auch nach dem Lösevorgang die FBA Wirkung durch einen manuellen Vorgang wieder hergestellt werden.

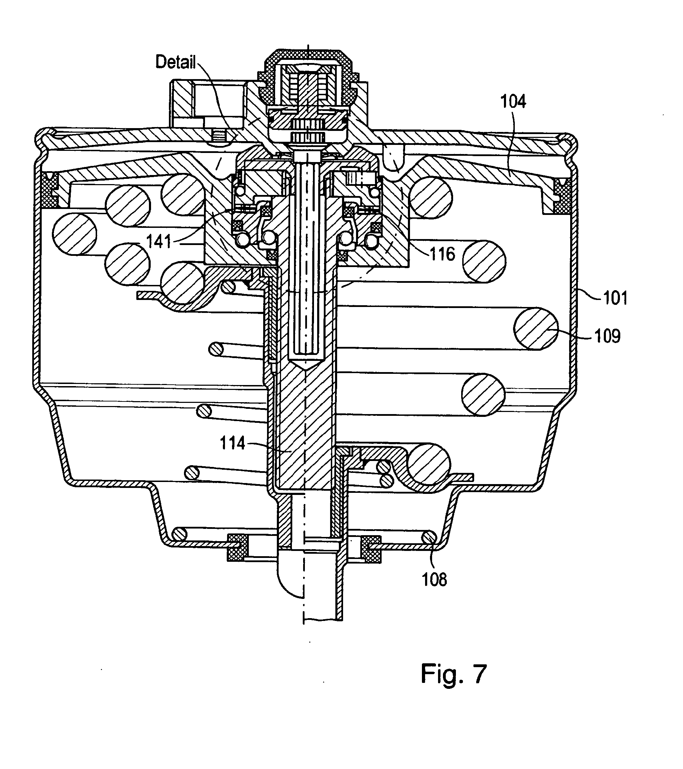

Fig. 7 zeigt einen weiteren Kompakt-Kombibremszylinder mit einer Gewindespindel 114 mit Steilgewinde (nicht selbst hemmend). Das Steilgewinde dient wieder dazu, die Federspeicherfeder in der so genannten Lösestellung zu arretieren. Dazu wird die Gewindespindel mittels der pneumatisch betätigten Sperrvorrichtung, der Kupplung 116 oder einer Bremse festgesetzt. Beim Einlegen der Feststellbremse wird der Sperrmechanismus entlüftet (hier nicht zu erkennen), wodurch sich die Gewindespindel 114 drehen und die Federspeicherfeder 109 entspannen kann.

Bei der weiter vorgeschlagenen Lösung dient diese Gewindespindel 114 auch zum manuellen Lösen der Federspeicherfeder 109. Dabei wird die Gewindespindel 114 durch eine externe Krafteinleitung in Drehung versetzt. Da es sich hierbei um ein nicht selbst hemmendes Steilgewinde handelt. würde z.B. beim Umsetzen des Schraubenschlüssels die Spindel sofort wieder zurückdrehen und die Federspeicherfeder somit wieder zur Wirkung kommen. Daher ist es erforderlich, dass der Mechanismus mit einer richtungsabhängigen Sperrfunktion ausgestattet ist. Diese Sperrvorrichtung wird noch weiteren Anforderungen gerecht werden.

Die im Anschluss dargestellte und näher beschriebene Lösevorrichtung basiert auf einem kraftschlüssigen Freilaufsystem 141. Sie weist, wie nachfolgend beschrieben, folgende Elemente auf: eine Sperrscheibe 142, einen Sperrzylinder 143, eine Formfeder 144, eine Scheibe 145 sowie vorzugsweise den Betätigungsdorn 136 und eine drehfeste Topfscheibe 147.

Die Sperrscheibe 142 ist mit der Gewindespindel 114 drehfest gekoppelt und weist eine Aussparung zur Aufnahme des Sperrzylinders 143 auf. Der Sperrzylinder 143 ist mittels einer Formfeder 144 vorgespannt. Die Formfeder 144 ist zwischen die Sperrscheibe 142 und den Sperrzylinder 143 eingehängt. Die Scheibe 145 im axialen Anschluss an die Sperrscheibe 142 dient dazu, die Freilauffunktion ein und auszuschalten und das Drehmoment auf die Sperrscheibe 142 zu übertragen. Der profilierte Betätigungsdorn 136 dient wiederum zur Einleitung des manuell aufgebrachten Drehmoments. Ferner dient er zur Ein- und Ausschaltung der Lösevorrichtung.

Der Betätigungsdorn 136 ist im Gehäuse des Bremszylinders dreh und schwenkbar gelagert. An der drehfesten Topfscheibe 147 bzw. an deren zylindrischer Innenkontur stützen sich die Sperrscheibe 142 und der Sperrzylinder 143 reibschlüssig ab.

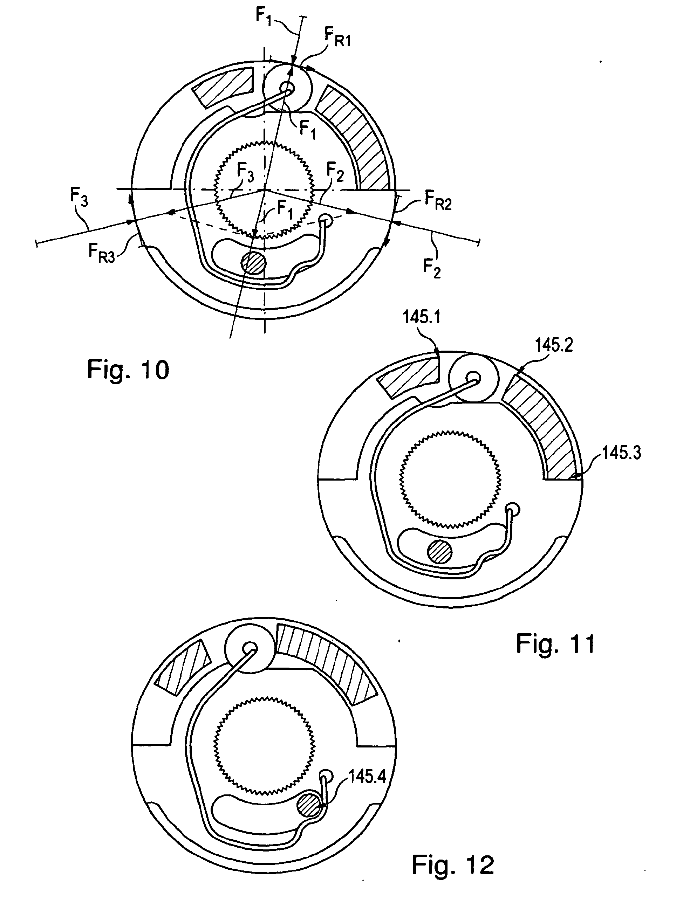

Die Sperrscheibe 142 ist so gestaltet, dass durch eine bestimmte Winkelstellung eine Erhöhung der Anpresskraft an den beiden Stützsegmenten erreicht wird (Fig. 10). Dadurch kann mit einer relativ geringen Anpresskraft am Klemmzylinder eine relativ hohe Reibkraft erzielen. Durch die deutliche Reduzierung der Belastung des Klemmzylinders kann die Verschleißfestigkeit des Mechanismus erheblich gesteigert werden.

Die Funktion dieser Anordnung ist wie folgt:

### Lösen der Federspeicherbremse (Fig. 11):

Beim manuellen Lösen der Federspeicherfeder muss die Gewindespindel 114 mit Hilfe eines Schraubenschlüssels zurückgedreht werden. Das Drehmoment wird dabei über den Betätigungsdom 136 in die Scheibe 4 übertragen. Durch das Verdrehen der Scheibe 145 relativ zur Sperrscheibe 142 wird der Sperrzylinder 143 durch die Anschlagschulter 145.1 der Scheibe 145 aus der Ruhstellung auf die Klemmkontur 145.2 geschoben. Der Sperrzylinder 143 wird dabei durch die Formfeder 144 elastisch gegen die zylindrische Innenkontur 147.1 der drehfesten Topfscheibe 147 gedrückt. Gleichzeitig kommt die Anschlagschulter 145.3 der Scheibe 145 in Kontakt mit der entsprechenden Gegenkontur der Sperrscheibe 142. Dadurch erfolgt eine Übertragung des Drehmoments von der Scheibe 145 auf die Sperrscheibe 142 und von dort auf die auf die Gewindespindel 114. Da der Sperrzylinder 143 aufgrund der richtungsabhängigen, reibschlüssigen Sperrwirkung ein selbsttätiges Zurückdrehen der Gewindespindel 141 verhindert, kann der Schraubenschlüssel ohne Aufdrehen der Gewindespindel 141 umgesetzt werden.

Dieser Vorgang kann solange wiederholt werden, bis die Federspeicherfeder die Lösestellung für die Feststellbremse erreicht hat.

### Manuelles Einlegen der Federspeicherbremse

Wenn die Federspeicherfeder von der Position "Federspeicher gelöst" manuell in die Position "Federspeicher eingelegt" gebracht werden soll, muss mit dem Schraubenschlüssel eine Drehbewegung in Sperrrichtung des Freilaufmechanismus ausgeführt werden.

Dabei wird die Scheibe 145 relativ zur Sperrscheibe 142 verdreht und mit der Anschlagschulter 145.2 der Klemmzylinder 143 aus der Klemmposition gedrückt. Der Kraftschluss zwischen der Klemmscheibe 142 und der drehfesten Topfscheibe 147 wird dadurch aufgehoben und ein Verdrehen der Gewindespindel 114 ist möglich. Da sich die Gewindespindel 114 schneller bewegt als die vom Schraubenschlüssel geführte Scheibe 145 kommt es zu einer Relativbewegung zwischen Sperrscheibe 142 und Scheibe 145 und folglich wieder zum Eingriff des Sperrzylinders 143 in die Innenkontur der drehfesten Topfscheibe 147. Damit wird gewährleistet, dass sich die Gewindespindel 114 nur so weit und so schnell dreht, wie von der Drehbewegung des Schraubenschlüssels vorgegeben wird.

### Deaktivierung und Arretierung der manuellen Lösevorrichtung (Fig. 12)

Hiefür ist es notwendig, den Betätigungsdom 136 mit Hilfe eines Schraubenschlüssels in Richtung "Federspeicherbremse einlegen" zu drehen, bis eine weitere Drehung nicht mehr möglich ist. Dadurch wird erreicht, dass die Scheibe 145 relativ zur Sperrscheibe 142 verdreht wird und sowohl der Klemmzylinder 143 in eine Raststellung auf der Klemmscheibe 142 als auch der Arretierungsstift 145.4 der Scheibe 145 in eine Raststellung der Formfeder 144 gebracht wird.

### Bezugszeichenliste

- Kompaktbremszylinder: 100
- Gehäuse: 101
- Deckel: 102
- Druckluftanschlüsse: 103
- Kolben: 104
- Umfangsdichtring: 105
- Druckraum: 106
- Raum: 107
- Rückholfeder: 108
- Federspeicherfeder: 109
- Federspeicherkolben: 110
- Kragen: 111
- Kolbenstange: 112
- Öffnung: 113
- Gewindespindel: 114
- Sperrmechanismus: 116
- Aufnahmeraum: 117
- Wälzkörper: 118
- Ausnehmung: 119
- Bolzen: 120
- Sperrmechanismuskolben: 121
- Kolbendichtungen: 122, 123
- Druckraum: 124
- Wälzkörper: 125
- Ratschenmechanismus: 126
- Drehvorrichtung: 127
- Buchse: 128
- Bolzen: 129
- Lagerscheibe: 132
- Sperrklinke: 133
- Steuerscheibe: 134
- Topfscheibe: 135
- Betätigungsdorn: 136
- Stift: 137
- Blattfeder: 138
- Steuerkontur: 139
- Langloch: 140
- Freilaufsystem: 141
- Sperrscheibe: 142
- Sperrzylinder: 143
- Formfeder: 144
- Scheibe: 145
- Anschlagschulter: 145.1
- Klemmkontur: 145.2
- Anschlagschulter: 145.3
- Arretierungsstift: 145.4
- Topfscheibe: 147

## Patentansprüche

1. Bremszylinder für pneumatisch betätigte Fahrzeugbremsen, insbesondere für Nutzfahrzeuge, mit
a. einem Federspeicherbremsabschnitt zur Durchführung von Feststellbremsvorgängen mittels einer Federspeicherfeder (109), und einem Betriebsbremsabschnitt zur Durchführung druckluftbetätigter Betriebsbremsungen, wobei der Federspeicherbremsabschnitt und der Betriebsbremsabschnitt zu einer baulichen Einheit in einem Gehäuse (101) zusammengefasst sind,
b. wobei das Gehäuse (101) von einem Kolben (104) in zwei Räume (106, 107) unterteilt ist, von denen der eine der beiden Räume (106) als Druckraum zum Betätigen des Betriebsbremsabschnittes dient, und wobei die Federspeicherfeder (109) des Federspeicherabschnittes in dem weiteren Raum (107) auf der gegenüberliegenden Seite des Kolbens (104) angeordnet ist,
c. wobei die Federspeicherfeder (109) auf einen weiteren Federspeicherkolben (110) im Raum (107) wirkt, der mittels eines pneumatisch betätigbaren Sperrmechanismus (116) gegenüber dem Kolben (104) arretierbar und durch Lösen des Sperrmechanismus von diesem lösbar ist, und der direkt oder über weitere Elemente mit einer Kolbenstange (112) zum Betätigen der Fahrzeugbremse verbunden ist,
d. wobei nach dem Lösen des Sperrmechanismus (116) die Federspeicherfeder (109) zwischen den beiden Kolben (104, 110) wirkt und diese bei einer Feststellbremsung relativ zueinander verschiebt,
**dadurch gekennzeichnet, dass**
e. der Bremszylinder neben dem pneumatisch betätigbaren Sperrmechanismus eine manuell betätigbare Lösevorrichtung zum manuellen Lösen des Federspeicherbremsabschnittes ohne Beeinträchtigung der Funktion des Betriebsbremsabschnittes aufweist.

2. Bremszylinder nach einem der vorstehenden Ansprüche, **dadurch gekennzeichnet, dass** der durch die Federspeicherfeder (109) belastete Federspeicherkolben (110) mit einer Gewindespindel (114) in Eingriff steht, die mit einer Bremse oder Kupplung (116) als pneumatisch betätigbarer Sperrmechanismus in Wirkverbindung steht, so dass im Lösezustand des Bremszylinders die Spindel (114) gegen Drehung gesichert ist, und dass durch Verringerung oder Aufhebung des Eingriffs der Bremse oder Kupplung (116) die Gewindespindel (114) drehfähig ist, so dass durch die Entspannung der Federspeicherfeder (109) der Federspeicherkolben (110) in Längsrichtung der Gewindespindel (114) verfahrbar ist.

3. Bremszylinder nach Anspruch 1 oder 2, **dadurch gekennzeichnet, dass** die manuell betätigbare Lösevorrichtung eine richtungsabhängige, manuell betätigbare Sperrvorrichtung für die Gewindespindel (114) aufweist.

4. Bremszylinder nach Anspruch 3, **dadurch gekennzeichnet, dass** die Sperrvorrichtung als reibschlüssiges System ausgelegt ist.

5. Bremszylinder nach Anspruch 3, **dadurch gekennzeichnet, dass** die Sperrvorrichtung als reibschlüssiges System ausgelegt ist, das einen Freilauf aufweist.

6. Bremszylinder nach Anspruch 5, **dadurch gekennzeichnet, dass** die Sperrvorrichtung als formschlüssiges System ausgelegt ist.

7. Bremszylinder nach Anspruch 6, **dadurch gekennzeichnet, dass** der Sperrmechanismus als formschlüssiges System ausgelegt ist, das einen Ratschenmechanismus aufweist.

8. Bremszylinder nach einem der vorstehenden Ansprüche 2-7, **dadurch gekennzeichnet, dass** die Gewindespindel (114) nicht selbsthemmend ist, und dass die Reibkraft der Kupplung oder Bremse (116) mittels eines druckluftbeaufschlagbaren Sperrmechanismuskolbens (121) regelbar ist.

9. Bremszylinder nach Anspruch 7 oder 8, **dadurch gekennzeichnet, dass** der Ratschenmechanismus eine Scheibe (135) mit Innenverzahnung aufweist, welche mit einer beweglichen Sperrklinke (133) mit korrespondierender Verzahnung beim manuellen Lösevorgang im Eingriff ist.

10. Bremszylinder nach einem der vorstehenden Ansprüche 3-9, **dadurch gekennzeichnet, dass** die manuell betätigbare Sperrvorrichtung derart gestaltet ist, dass sie im Normalbetrieb des Bremszylinders ausgeschaltet ist.

11. Bremszylinder nach einem der vorstehenden Ansprüche 3-10, **dadurch gekennzeichnet, dass** die manuell betätigbare Sperrvorrichtung derart gestaltet ist, dass die Gewindespindel (114) in beide Richtungen verdrehbar ist.

12. Bremszylinder nach einem der vorstehenden Ansprüche 7-11, **dadurch gekennzeichnet, dass** der Ratschenmechanismus eine Lagerscheibe (132) aufweist, die mit der Gewindespindel (114) drehfest gekoppelt oder einstückig mit dieser ausgebildet ist.

13. Bremszylinder nach einem der vorstehenden Ansprüche 9-12, **dadurch gekennzeichnet, dass** die Lagerscheibe (132) eine Ausnehmung (119) für die Sperrklinke (133) aufweist und einen Stift (137) zur Drehmomentübertragung.

14. Bremszylinder nach einem der vorstehenden Ansprüche 9-13, **dadurch gekennzeichnet, dass** die Sperrklinke (133) drehbar in die Lagerscheibe (132) eingesetzt ist, durch einen angeformten Bolzen (120) mit der Steuerscheibe (134) verbunden ist und wird durch eine Blattfeder (138) radial nach außen gedrückt ist.

15. Bremszylinder nach einem der vorstehenden Ansprüche 7-14, **dadurch gekennzeichnet, dass** der Ratschenmechanismus eine Steuerscheibe (134) mit einer Steuerkontur (139), einem bogenförmigen Langloch (140) und einem mittig angeordneten sechskantförmigen Durchbruch aufweist.

16. Bremszylinder nach einem der vorstehenden Ansprüche, **dadurch gekennzeichnet, dass** ein profilierter Betätigungsdorn (136) vorgesehen ist, der zur Einleitung des manuell aufgebrachten Drehmoments dient und der zur Ein- und Ausschaltung der Lösevorrichtung dient.

17. Bremszylinder nach Anspruch 16, **dadurch gekennzeichnet, dass** der Betätigungsdorn (136) im Gehäuse des Bremszylinders dreh und schwenkbar gelagert ist.

18. Bremszylinder nach einem der vorstehenden Ansprüche, **dadurch gekennzeichnet, dass** die Lösevorrichtung als kraftschlüssiges Freilaufsystem (141) ausgebildet ist.

19. Bremszylinder nach Anspruch 18, **dadurch gekennzeichnet, dass** das Freilaufsystem (141) folgendes aufweist: eine Sperrscheibe (142), einen Sperrzylinder (143), eine Formfeder (144) und eine Scheibe (145).

20. Bremszylinder nach einem der vorstehenden Ansprüche 18-19, **dadurch gekennzeichnet, dass** das Freilaufsystem (141) ferner folgendes aufweist: den Betätigungsdom (136) und eine drehfeste Topfscheibe (147).

21. Bremszylinder nach einem der vorstehenden Ansprüche 19-20, **dadurch gekennzeichnet, dass** die Sperrscheibe (142) mit der Gewindespindel (114) drehfest gekoppelt ist und über eine Aussparung zur Aufnahme des Sperrzylinders (143) verfügt, wobei der Sperrzylinder (143) mittels der Formfeder (144) vorgespannt ist.

22. Bremszylinder nach Anspruch 21, **dadurch gekennzeichnet, dass** die Formfeder (144) zwischen die Sperrscheibe (142) und den Sperrzylinder (143) eingehängt ist.

23. Bremszylinder nach Anspruch 22, **dadurch gekennzeichnet, dass** die Scheibe (145) dazu ausgelegt ist, die Freilauffunktion ein und auszuschalten und das Drehmoment auf die Sperrscheibe (142) zu übertragen.

24. Bremszylinder nach Anspruch 23, **dadurch gekennzeichnet, dass** die Scheibe (145) aufweist: eine erste Anschlagschulter (145.1), eine Klemmkontur (145.2), eine Anschlagschulter (145.3) und einen Arretierungsstift (145.4).

25. Bremszylinder nach Anspruch 21, 22, 23 oder 24, **gekennzeichnet durch** eine Ausgestaltung der Sperrscheibe (143) derart, dass eine bestimmte Winkelstellung eine Erhöhung der Anpresskraft an den beiden Stützsegmenten erreicht wird.

## Claims

1. A brake cylinder for pneumatically actuated vehicle brakes, in particular for commercial vehicles, having
a. a spring force accumulator brake section for carrying out parking brake operations by means of a spring force accumulator spring (109), and a service brake section for carrying out service brake operations which are actuated by compressed air, the spring force accumulator brake section and the service brake section being combined in a housing (101) to form one structural unit,
b. the housing (101) being divided by a piston (104) into two spaces (106, 107), of which one of the two spaces (106) serves as pressure space for actuating the service brake section, and the spring force accumulator spring (109) of the spring force accumulator section being arranged in the further space (107) on the opposite side of the piston (104),
c. the spring force accumulator spring (109) acting in the space (107) on a further spring force accumulator piston (110) which can be locked with respect to the piston (104) by means of a pneumatically actuable locking mechanism (116) and can be released from the locking mechanism by release of the latter, and which is connected directly or via further elements to a piston rod (112) for actuating the vehicle brake,
d. after the release of the locking mechanism (116), the spring force accumulator spring (109) acting between the two pistons (104, 110) and displacing them relative to one another in the case of a parking brake operation,
**characterized in that**,
e. in addition to the pneumatically actuable locking mechanism, the brake cylinder has a manually actuable release device for manually releasing the spring force accumulator brake section without impairment of the function of the service brake section.

2. The brake cylinder as claimed in one of the preceding claims, **characterized in that** the spring force accumulator piston (110) which is loaded by the spring force accumulator spring (109) is in engagement with a threaded spindle (114) which is operatively connected to a brake or clutch (116) as pneumatically actuable locking mechanism, with the result that the spindle (114) is secured against rotation in the release state of the brake cylinder, and that the threaded spindle (114) is capable of rotation as a result of reduction or cancelation of the engagement of the brake or clutch (116), with the result that the spring force accumulator piston (110) can be moved in the longitudinal direction of the threaded spindle (114) as a result of the relief of the spring force accumulator spring (109).

3. The brake cylinder as claimed in claim 1 or 2, **characterized in that** the manually actuable release device has a direction-dependent, manually actuable locking apparatus for the threaded spindle (114).

4. The brake cylinder as claimed in claim 3, **characterized in that** the locking apparatus is designed as a frictionally engaging system.

5. The brake cylinder as claimed in claim 3, **characterized in that** the locking apparatus is designed as a frictionally engaging system which has a free wheel.

6. The brake cylinder as claimed in claim 5, **characterized in that** the locking apparatus is designed as a positively engaging system.

7. The brake cylinder as claimed in claim 6, **characterized in that** the locking mechanism is designed as a positively engaging system which has a ratchet mechanism.

8. The brake cylinder as claimed in one of the preceding claims 2 to 7, **characterized in that** the threaded spindle (114) is not self-locking, and **in that** the frictional force of the clutch or brake (116) can be regulated by means of a locking mechanism piston (121) which can be loaded with compressed air.

9. The brake cylinder as claimed in claim 7 or 8, **characterized in that** the ratchet mechanism has a disk (135) having an internal toothing system which is in engagement with a movable locking pawl (133) having a corresponding toothing system in the case of the manual release operation.

10. The brake cylinder as claimed in one of the preceding claims 3 to 9, **characterized in that** the manually actuable locking apparatus is designed in such a way that it is switched off during normal operation of the brake cylinder.

11. The brake cylinder as claimed in one of the preceding claims 3 to 10, **characterized in that** the manually actuable locking apparatus is designed in such a way that the threaded spindle (114) can be rotated in both directions.

12. The brake cylinder as claimed in one of the preceding claims 7 to 11, **characterized in that** the ratchet mechanism has a bearing plate (132) which is coupled in a rotationally fixed manner to the threaded spindle (114) or is integrally configured with the latter.

13. The brake cylinder as claimed in one of the preceding claims 9 to 12, **characterized in that** the bearing plate (132) has a recess (119) for the locking pawl (133) and a pin (137) for torque transmission.

14. The brake cylinder as claimed in one of the preceding claims 9 to 13, **characterized in that** the locking pawl (133) is inserted rotatably into the bearing plate (132), is connected to the disk cam (134) by an integrally formed pin (120) and is pressed radially to the outside by a leaf spring (138).

15. The brake cylinder as claimed in one of the preceding claims 7 to 14, **characterized in that** the ratchet mechanism has a disk cam (134) with a control contour (139), an arcuate slot (140) and a centrally arranged hexagonal aperture.

16. The brake cylinder as claimed in one of the preceding claims, **characterized in that** a profiled actuating mandrel (136) is provided which serves to introduce the manually applied torque and which serves to switch the release device on and off.

17. The brake cylinder as claimed in claim 16, **characterized in that** the actuating mandrel (136) is mounted rotatably and pivotably in the housing of the brake cylinder.

18. The brake cylinder as claimed in one of the preceding claims, **characterized in that** the release device is configured as a nonpositive freewheeling system (141).

19. The brake cylinder as claimed in claim 18, **characterized in that** the freewheeling system (141) has the following: a locking disk (142), a locking cylinder (143), a shaped spring (144) and a disk (145).

20. The brake cylinder as claimed in one of the preceding claims 18 to 19, **characterized in that**, furthermore, the freewheeling system (141) has the following: the actuating mandrel (136) and a rotationally fixed cup disk (147).

21. The brake cylinder as claimed in one of the preceding claims 19 to 20, **characterized in that** the locking disk (142) is coupled to the threaded spindle (114) in a rotationally fixed manner and has a cutout for receiving the locking cylinder (143), the locking cylinder (143) being prestressed by means of the shaped spring (144).

22. The brake cylinder as claimed in claim 21, **characterized in that** the shaped spring (144) is suspended between the locking disk (142) and the locking cylinder (143).

23. The brake cylinder as claimed in claim 22, **characterized in that** the disk (145) is designed to switch the freewheeling function on and off and to transmit the torque to the locking disk (142).

24. The brake cylinder as claimed in claim 23, **characterized in that** the disk (145) has the following: a first stop shoulder (145.1), a clamping contour (145.2), a stop shoulder (145.3) and a locking peg (145.4).

25. The brake cylinder as claimed in claim 21, 22, 23 or 24, **characterized by** a design of the locking disk (143) such that a defined angular position achieves an increase in the pressing force on the two supporting segments.

## Revendications

1. Cylindre de frein pour des freins de véhicule à actionnement pneumatique, notamment pour des véhicules utilitaires, comprenant
a. une partie de frein à ressort accumulateur, pour effectuer des opérations de freinage de stationnement au moyen d'un ressort (109) accumulateur, et une partie de frein de service, pour effectuer des freinages de service actionnés par de l'air comprimé, dans lequel la partie de frein à ressort accumulateur et la partie de frein de service sont rassemblées en une unité de construction dans une boîte (101),
b. dans lequel la boîte (101) est subdivisée par un piston (104) en deux chambres (106, 107), dont l'une des deux chambres (106) sert d'espace de pression, pour l'actionnement de la partie de frein de service, et dans lequel le ressort (109) accumulateur de la partie à ressort accumulateur est placé dans l'autre chambre (107) sur la face opposée du piston (104),
c. dans lequel le ressort (109) accumulateur agit dans la chambre (107) sur un autre piston (110) à ressort accumulateur, qui peut être bloqué par rapport au piston (104) au moyen d'un mécanisme (106) de blocage pouvant être actionné pneumatiquement et qui peut en être séparé en débloquant le mécanisme de blocage, et qui est relié directement ou par d'autres éléments à une tige (112) de piston pour l'actionnement du frein du véhicule,
d. dans lequel, après le déblocage du mécanisme (106) de blocage, le ressort (109) accumulateur agit entre les deux pistons (104, 110) et les déplace l'un par rapport à l'autre dans un freinage de stationnement, **caractérisé en ce que**
e. le cylindre de frein a, outre le mécanisme de blocage pouvant être actionné pneumatiquement, un dispositif de desserrage pouvant être actionné manuellement, pour le desserrage manuel de la partie de frein à ressort accumulateur, sans porter atteinte au fonctionnement de la partie de frein de service.

2. Cylindre de frein suivant l'une des revendications précédentes, **caractérisé en ce que** le piston (110) à ressort accumulateur chargé par le ressort (109) accumulateur est en prise avec une broche (114) filetée, qui coopère en tant que mécanisme de blocage pouvant être actionné pneumatiquement avec un frein ou un accouplement (116), de sorte que, lorsque le cylindre de frein est à l'état relâché, la broche (114) est empêchée de tourner, et **en ce que**, en diminuant ou en augmentant la prise du frein ou de l'accouplement (116), la broche (114) filetée est apte à tourner, de sorte que, par la détente du ressort (109) accumulateur, le piston (110) à ressort accumulateur peut être déplacé dans la direction longitudinale de la broche (114) filetée.

3. Cylindre de frein suivant la revendication 1 ou 2, **caractérisé en ce que** le dispositif de desserrage pouvant être actionné manuellement comporte un dispositif de blocage indépendant du sens et pouvant être actionné manuellement de la broche (114) filetée.

4. Cylindre de frein suivant la revendication 3, **caractérisé en ce que** le dispositif de blocage est conçu sous la forme d'un système à friction.

5. Cylindre de frein suivant la revendication 3, **caractérisé en ce que** le dispositif de blocage est conçu sous la forme d'un système à friction, qui a une roue libre.

6. Cylindre de frein suivant la revendication 5, **caractérisé en ce que** le dispositif de blocage est conçu sous la forme d'un système à complémentarité de forme.

7. Cylindre de frein suivant la revendication 6, **caractérisé en ce que** le dispositif de blocage est conçu sous la forme d'un système à complémentarité de forme, qui a un mécanisme de cliquet.

8. Cylindre de frein suivant l'une des revendications précédentes 2 à 7, **caractérisé en ce que** la broche (114) filetée n'est pas autobloquante et **en ce que** la force de frottement de l'accouplement et du frein (116) peut être réglée au moyen d'un piston (121) de mécanisme de blocage pouvant être alimenté en air comprimé.

9. Cylindre de frein suivant la revendication 7 ou 8, **caractérisé en ce que** le mécanisme à cliquet comporte un disque (135) ayant une denture intérieure, qui est en prise lors d'une opération de desserrage manuel avec un cliquet (133) mobile de blocage ayant une denture correspondante.

10. Cylindre de frein suivant l'une des revendications précédentes 3 à 9, **caractérisé en ce que** le dispositif de blocage pouvant être actionné manuellement est conformé de manière à se débrancher lorsque le cylindre de frein fonctionne normalement.

11. Cylindre de frein suivant l'une des revendications précédentes 3 à 10, **caractérisé en ce que** le dispositif de blocage pouvant être actionné manuellement est conformé de manière à ce que la broche (114) filetée puisse tourner dans les deux sens.

12. Cylindre de frein suivant l'une des revendications précédentes 7 à 11, **caractérisé en ce que** le mécanisme à cliquet comporte un disque (132) formant palier, qui est solidaire en rotation avec la broche (114) ou qui est d'une pièce avec celle-ci.

13. Cylindre de frein suivant l'une des revendications précédentes 9 à 12, **caractérisé en ce que** le disque (132) formant palier a un évidement (119) pour le cliquet (133) de blocage et un doigt (137) pour la transmission du couple de rotation.

14. Cylindre de frein suivant l'une des revendications précédentes 9 à 13, **caractérisé en ce que** le cliquet (133) de blocage est inséré, de manière à pouvoir tourner, dans le disque formant palier et relié au disque (134) de commande par un axe (120) qui y est formé et repoussé radialement vers l'extérieur par un ressort (138) à lame.

15. Cylindre de frein suivant l'une des revendications précédentes 7 à 14, **caractérisé en ce que** le mécanisme à cliquet a un disque (134) de commande ayant un contour (139) de commande, une boutonnière (140) arquée et un passage à six pans disposé au milieu.

16. Cylindre de frein suivant l'une des revendications précédentes, **caractérisé en ce qu'**il est prévu un mandrin (136) d'actionnement profilé, qui sert à l'application d'un couple de rotation appliqué manuellement et qui sert au branchement et au débranchement du dispositif de desserrage.

17. Cylindre de frein suivant la revendication 16, **caractérisé en ce que** le mandrin (136) d'actionnement est monté à rotation et à pivotement dans la boîte du cylindre de frein.

18. Cylindre de frein suivant l'une des revendications précédentes, **caractérisé en ce que** le dispositif de desserrage est constitué sous la forme d'un système (141) à roue libre à complémentarité de force.

19. Cylindre de frein suivant la revendication 18, **caractérisé en ce que** le système (141) à roue libre comporte ce qui suit : un disque (142) de blocage, un cylindre (143) de blocage, un ressort (144) de forme et un disque (145).

20. Cylindre de frein suivant l'une des revendications précédentes 18 et 19, **caractérisé en ce que** le système (141) à roue libre comporte, en outre, ce qui suit : le mandrin (136) d'actionnement et un disque (147) en cuvette fixe en rotation.

21. Cylindre de frein suivant l'une des revendications précédentes 19 et 20, **caractérisé en ce que** le disque (142) de blocage est solidaire en rotation de la broche (114) filetée et dispose d'un évidement de réception du cylindre (143) de blocage, le cylindre (143) de blocage étant mis sous tension préalable au moyen du ressort (144) de forme.

22. Cylindre de frein suivant la revendication 21, **caractérisé en ce que** le ressort (144) de forme est accroché entre le disque (142) de blocage et le cylindre (143) de blocage.

23. Cylindre de frein suivant la revendication 22, **caractérisé en ce que** le disque (145) est conçu pour brancher et débrancher la fonction de roue libre et pour transmettre le couple de rotation au disque (142) de blocage.

24. Cylindre de frein suivant la revendication 23, **caractérisé en ce que** le disque (145) comporte : un épaulement (145.1) de butée, un contour (145.2) de serrage, un épaulement (145.3) de butée et un doigt (145.4) d'arrêt.

25. Cylindre de frein suivant la revendication 21, 22, 23 ou 24, **caractérisé par** une conformation du disque (143) de blocage, de manière à ce que, à une position angulaire déterminée, une augmentation de la force de pression sur les deux segments d'appui soit obtenue.
